(19) Europäisches Patentamt / European Patent Office / Office européen des brevets

(11) **EP 4 088 138 B1**

(12) **EUROPEAN PATENT SPECIFICATION**

(45) Date of publication and mention
of the grant of the patent:
**25.12.2024 Bulletin 2024/52**

(21) Application number: **22707013.3**

(22) Date of filing: **02.02.2022**

(51) International Patent Classification (IPC):
*G01S 7/481* (2006.01)    *G01S 7/487* (2006.01)
*G01S 17/18* (2020.01)    *G01S 17/42* (2006.01)
*G01S 17/86* (2020.01)    *G01S 17/894* (2020.01)
*H04N 13/10* (2018.01)

(52) Cooperative Patent Classification (CPC):
**G01S 17/894; G01S 7/4815; G01S 7/4816;
G01S 7/4876; G01S 17/18; G01S 17/42;
G01S 17/86**

(86) International application number:
**PCT/EP2022/052506**

(87) International publication number:
**WO 2022/167496 (11.08.2022 Gazette 2022/32)**

(54) **AN ACTIVE IMAGING SYSTEM**

AKTIVES ABBILDUNGSSYSTEM

SYSTÈME D'IMAGERIE ACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2021 GB 202101412**

(43) Date of publication of application:
**16.11.2022 Bulletin 2022/46**

(73) Proprietor: **Leonardo UK Ltd
London SW1Y 6AF (GB)**

(72) Inventor: **BARR, John
London SW1Y 6AF (GB)**

(74) Representative: **Tolfree, Adam Joseph Benjamin
Impetus IP Ltd
Office One
Ridgecombe Barn
Lifton, Devon PL16 0HD (GB)**

(56) References cited:
**US-A1- 2016 363 653    US-A1- 2020 124 726**

**Description**

Observation systems are used to monitor a local environment using a number of sensors for the purposes of one or more of detection (acquisition), tracking and identification of remote objects.

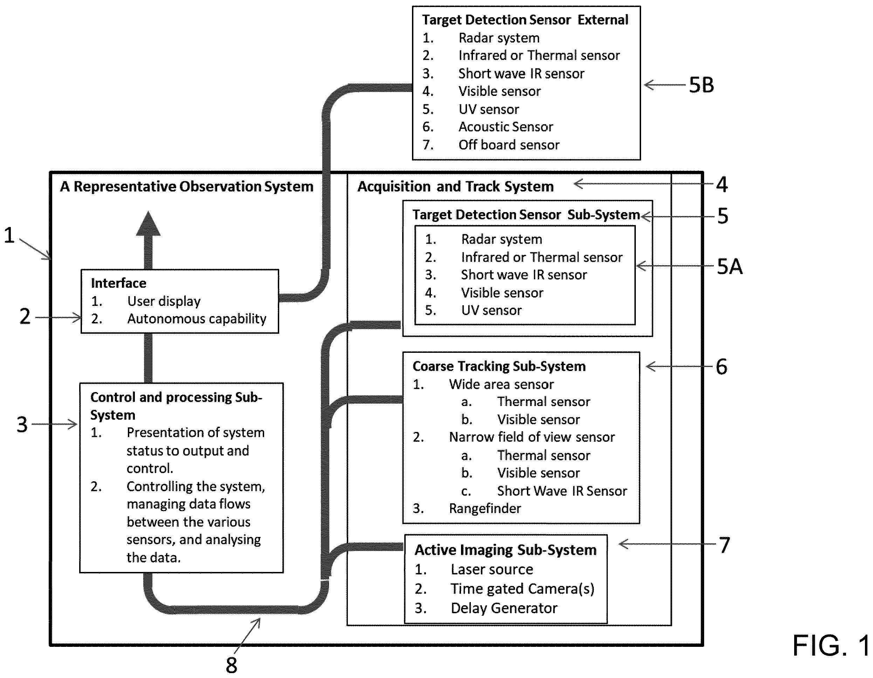

Figure 1 illustrates a schematic of a representative prior art observation system 1 designed to detect objects within its local environment which may lie in the range 100m to 20km or more from the system's 1 location. The system 1 may be mounted in an aircraft or other airborne platform, on a land vehicle, or on a seagoing vessel.

The observation system 1 comprises an interface 2, a control and processing sub system 3, and an acquisition and track system 4.

The control and processing subsystem 3 outputs system status data as well as processed images, track data and target information via the interface 2.

The interface 2 may comprise, for example, a display for presenting an image to a human observer for analysis and action. Alternatively or additionally, the interface may comprise an output that provide an input to an autonomous system capable of processing output data from the observation system 1, e.g. an image or series of images, and taking appropriate action without human intervention.

The control and processing sub-system 3 controls the acquisition and track system 4, which comprises three sub-systems: a target detection sensor sub-system 5; a coarse tracking sub-system 6; and an active imaging sub-system 7. A support umbilical 8 interconnects the control and processing sub-system 3 with the sub-systems of the acquisition and track system 4 and comprises electrical power and data cables (bus) as well as thermal management services, if required (e.g. cooled air or liquid).

The coarse tracking sub-system 6 comprises one or more sensors for tracking a target. The sensors may include a wide field of view (WFOV) tracking sensor which can detect a wide range of angles and is useful for quickly detection a target with limited spatial resolution; and a narrow field of view (NFOV) tracking sensor which has high resolution for target classification and possibly identification. The precise values will be determined by the system application.

The wide field of view sensors may include one or more cameras or detectors operating in one or more of the following bands: an ultraviolet (UV), visible, near infra-red (NIR), short wave infra-red (SWIR), medium wave infra-red (MWIR) and long wave infra-red light (LWIR).

The narrow field of view sensor may include one or more cameras or detectors operating in one or more of the following bands: a ultraviolet (UV), visible, near infra-red (NIR), short wave infra-red (SWIR), medium wave infra-red (MWIR) and long wave infra-red light (LWIR).

The coarse tracking sub-system 6 may also include a rangefinder, e.g. a laser rangefinder. The ranger finder provides range information to the target which may aid target prioritisation or identification.

The coarse tracking sub-system 6 is steerable, e.g. using motors to control a gimbal system on which the various sensors are fixed. The field of regard (FoR) encompasses all possible directions in space that the acquisition and track system 4 can view while the field of view (FoV) describes smaller set of directions in space it can actually see at any one time.

The target detection sensor sub-system 5 takes data from one or more of many possible sensors 5A 5B that may be internal 5A and/or external 5B to the observation system 1 in order to derive a direction in space to enable the observation system 1 to start searching for the potential target object. Data from external sensors 5B is received through the interface 2. In an alternative arrangement the function of the target detection sensor sub-system 5 may be performed by an external system and its input received through interface 2.

When a potential target is identified from the output of one or more of the external sensors, the control and processing sub-system verifies that the potential target is within the system field of regard (FoR) of the coarse tracking sub-system 6. If it is not, the control and processing sub-system 2 does nothing, otherwise it instructs the coarse tracking sub-system 6 to orientate itself so that the potential target is within at least one of its sensor's field of view (FoV). It is important that the measurement errors in the target's position are smaller than the NFoV tracking sensor field of regard. The WFoV and NFoV tracking sensors are aligned using one of several known processes so the sightlines are harmonised or co-boresighted.

The external target detection sensors 5B may be local to the observation system or they may be remote from the observations system, for example on a separate platform or on a separate observation system nearby. The external target detection sensors, a sub-set of which are referred to as cameras or, in the case of IR cameras, as FLIRS (Forward looking infra-red sensors), may comprise one or more of the following: human viewing; radar system; infrared (IR) or thermal camera; short wave IR camera; visible light camera; ultraviolet (UV) sensor and/or camera and an acoustic sensor.

An example observation system is an infra-red countermeasure (IRCM) system. An IRCM system is often composed of a remote target detection sensor known as a missile launch warner (MLW). The MLW may use a UV camera and/or an IR camera to detect the launch signature of a missile and provide a location of the launch site relative to the MLW platform. In this arrangement the MLW is entirely external to the observation system. The MLW reports the location of the launch to a processor, which plays the role of the control and processing subsystem 3. The processor instructs a turret at a separate location on the same platform to rotate so that its FOV points towards the location of the missile identified by the MLW. The turret contains a FLIR which equates to the coarse tracking module 6. The FLIP is capable of detecting the missile plume and therefore can acquire and track the missile. The processor analyses the data from the sensors on the turret.

Referring again to Fig 1, normally a target will be present within the WFoV sensor allowing the control and processing sub-system 3 to make small corrections to the coarse tracking sub-system 6 orientation so the target is centred in the WFoV enabling the system to continuously track the target. Having detected and started to track a target, possibly without yet identifying it, the control and processing sub-system 3 analyses the output from the NFoV sensor which is able to see the target because it is co-boresighted to the WFoV sensor. The better spatial resolution provided by the NFoV sensor may enable the control and processing sub-system 3 to identify the target. Identification may be achieved by suitable automatic target identification algorithms (ATI) within the control and processing sub system or by presenting the image to a human user for identification via interface 2. At this point, either the control and processing sub system 3 or the human classifies the target as of interest to its mission or not of interest to the mission. If the potential target is not of interest the control and processing sub-system 3 classifies the potential target as clutter. If the target is of interest it instructs the coarse tracking sub-system 6 to continue to track the object until its mission is complete.

There may be situations where a potential target cannot be identified because the NFoV sensor of the coarse tracking sub-system 6 is unable to provide an image of the potential target with sufficient spatial resolution in which case the active imaging sub-system 7 is initiated. The active imaging sub-system 7 uses a technique known as active illumination to obtain further images of the potential target.

Active imaging is a technique in which a light source, normally either a continuous wave (CW) laser or, more preferably, a pulsed laser, is used to illuminate a remote object. A suitable camera images the light reflected by the object. As most real targets are complex, in that targets are structured and may be composed of many materials with different surface treatments, the light reflected from them undergoes specular and diffuse reflection from the same target. The reflected light may also be depolarised to some degree. Advantages of active imaging include:

1. Where the laser uses a shorter wavelength than the WFoV and NFoV thermal sensor, it is possible to obtain captured images with better spatial resolution than from either the WFoV sensor or NFoV sensor which may help improve recognition of targets.

2. It is possible to filter light reaching the camera to a small range of wavelengths around the laser wavelength, which improves camera sensitivity and assists in localising the target within the overall FoV of the camera.

3. It allows for improved imaging contrast compared with a thermal image when limited due to the local thermal signature. For example, in the early morning and evening the temperature of the scene may become nearly isothermal making the contrast of any target too low with respect to the background to detect or identify. Active imaging allows for target imaging independent of the scene temperature.

4. It can be used to implement time gated imaging to remove objects from an image that are nearer and/or further away from the camera compared with the target. This process is often referred to as clutter reduction or clutter rejection. It can be used, for example to, allow the observer to see targets within netting based camouflage or within a room.

Time gated imaging is achieved by operating a pulsed laser at a point in time (laser firing time) and opening the camera gate at a gate open time which is delayed with respect to the laser firing time. The camera gate is closed at a gate closing time which is further delayed with respect to the laser firing time

Time gated imaging of this type provides intensity information in a two dimensional format with a spatial resolution defined by the camera pixel size. This may be referred to as two dimensional (2D) imaging.

If the length of the laser pulse is small compared to the target then it is possible to acquire more information about the target shape that may aid identification. This feature requires the camera to provide information on the time of arrival of the reflected light on a pixel by pixel basis, equivalent to a pixel level rangefinder, it will be possible to generate a range resolved point cloud that can be analysed to provide information of the target size and shape. This use of a time resolved time gated camera is often regarded as providing three dimensional information (3D) where two dimensions are the intensity data by pixel and the third dimension is the time of arrival of the signal.

A 2D time gated camera may also be used to develop 3D information. One approach is to use a number of laser pulses to interrogate the target at slightly different delays (gate opening times) relative to the laser fire time.

A CW laser illuminator may also be employed to produce a 2D image through the natural frame rate of the camera. Each image is integrated over the frame rate of the camera (typically 0.5 to 5ms or longer). All objects illuminated by the laser will be visible in the illuminated scene and this may include objects in the foreground or background which are not the intended target. The output of this type of camera does not enable clutter rejection based on time.

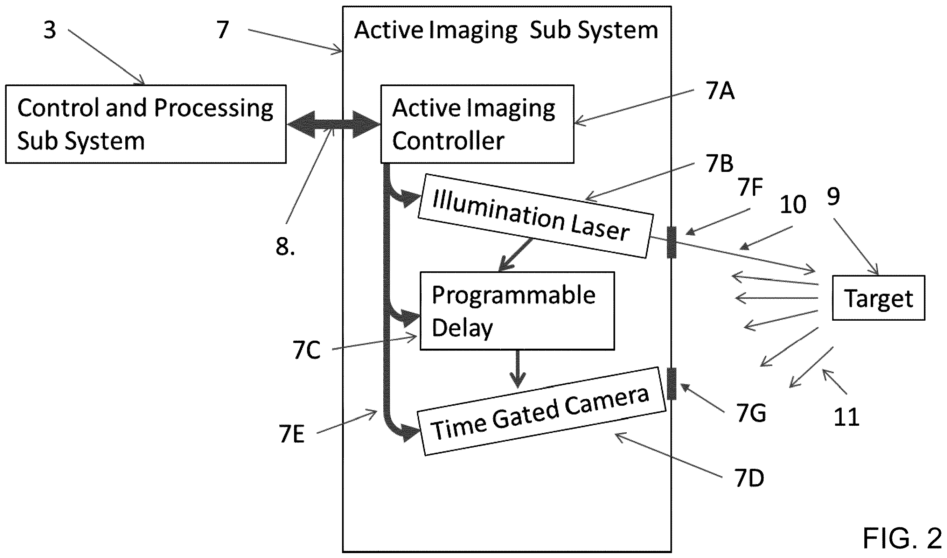

With reference to Fig 2 the active imaging sub-system 7 comprises an active imaging controller 7A, an illumination laser 7B, a programmable delay generator, 7C and a time gated camera 7D.

The active imaging controller 7A is adapted to receive instructions from the control and processing sub system via bus **8** and in turn control the first pulsed illumination laser 7B, the programmable delay 7C and time gated camera 7D via internal bus 7E.

In response to a signal received from the active imaging controller 7A, the illumination laser 7A illuminates a target 9 with pulsed light 10 via a first aperture 7F of the active imaging sub-system 7. The illumination laser 7B also provides a timing signal to the programmable time delay generator 7C which provides a time delayed signal, the Gate Open Signal, to the gated Camera 7D. In response to receiving the gate open signal the camera 12 opens its gate to collect reflected light 11 from the target 9 through a second aperture 7G. The Camera 7D is programmed to close its gate at a predetermined time from the Gate Open Signal.

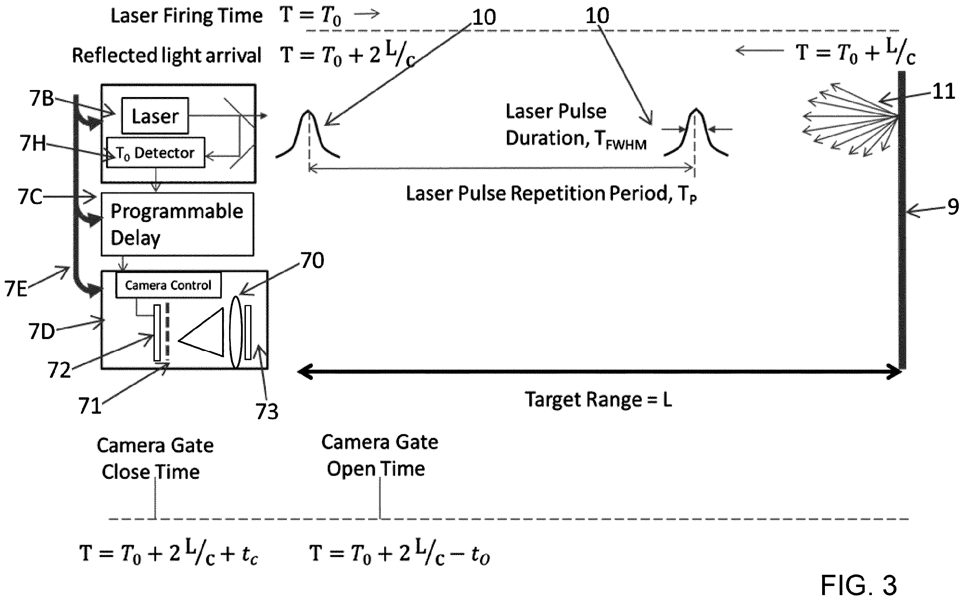

With reference Fig 3, the laser 7B produces an optical pulse 10 which has a duration described by its full width at half maximum, FWHM, by the symbol $T_{FWHM}$. For many applications a value of 5 to 50ns for $T_{FWHM}$ is common but both longer and shorter pulses may be used. For safety reasons the preferred wavelength of the illumination laser 7B is in the range 1.5$\mu$m to 1.8$\mu$m but other wavelengths with good atmospheric transmission may be used. The laser pulse length measured in time may be converted into a physical pulse length by multiplying by the speed of light, $c=3\times10^8 ms^{-1}$ (approximately). The physical duration of the range 5ns to 50ns corresponds to about 1.5m to 15m.

The laser 7B may be repetitively pulsed by a Laser Pulse Repetition Period, $T_p$. The pulse repetition period may be varied according to need. Typical values for $T_p$ fall in the range 100ms to 500$\mu$s. For improved timing accuracy between the laser 7B and the time gated camera 7D, optionally a small portion of the laser 7B output may directed to a $T_0$ detector 7H that in response generates a signal synchronised to the emission of the laser pulse 10 that provides the input to the programmable delay 7C. The time of emission of the laser pulse may be referred to as $T_0$.

The laser pulse propagates to the target 9 situated at a range L. The value of L may be known to the observation system 1, e.g. by use of the rangefinder in the coarse tracking sub-system 6. Where so, it is known that the pulse reaches the target 9 at a time $T_0 + L/c$ and the reflected light 11 reaches the time gated camera 7D at a time $T_0 + 2L/c$.

The controller 7A sets the programmable delay 7C to a time relative to $T_0$ of $2L/c - t_o$ so the camera gate opens before the reflected light arrives at the camera 7D. The camera gate closes after the pulse of reflected light has reached the camera 7D at a time relative to $T_0$ of $2L/c + t_c$ so that the time $t_o + t_c$ is the gate open time. The gate time should be larger than the pulse duration, $T_{FWHM}$, to allow for uncertainties in the measurement of $T_0$, but may be minimised to improve the signal to noise of the system.

The camera 7D comprises a lens system 70 that collects light entering the second aperture 7G and images it onto a focal plane array (FPA) 71. The focal plane array 71 is composed on a suitable pixilated detector material that can detect the laser light with sufficient sensitivity. Each pixel on the focal plane array 71 is processed by electronics on a connected readout integrated circuit (ROIC) 72. The ROIC 72 collects and integrates the photocurrent from each pixel and implements the gate circuitry, such that the sensitivity of the FPA 71 is effectively time switched from low to high to low in accordance with the gate open time. The image data collected during the gate open time is serialised and passed out to the control and processing sub-system 3 via bus 7E.

The gated camera 7D also includes a narrow band filter 73 to minimise the amount of non-laser light that reaches a focal plane array 71. For example, an active imaging system 7 may include a solid state laser 7B with a linewidth less than 1nm and a narrow band filter 73 with a passband about one nm. Alternatively, a semiconductor laser 7B with a linewidth less than 25nm may be used with a filter 73 with a pass band about 25nm. Both filters of these examples compare very favourably in terms of background noise to a short wave infrared detector based on InGaAs, which is typically sensitive to a spectral range of 0.6 to 1.7$\mu$m.

The active imaging system shown in Fig 2 illustrates a bistatic architecture where the laser 7B and the time Gated Camera 7D have separate transmit and receive apertures 7F 7G

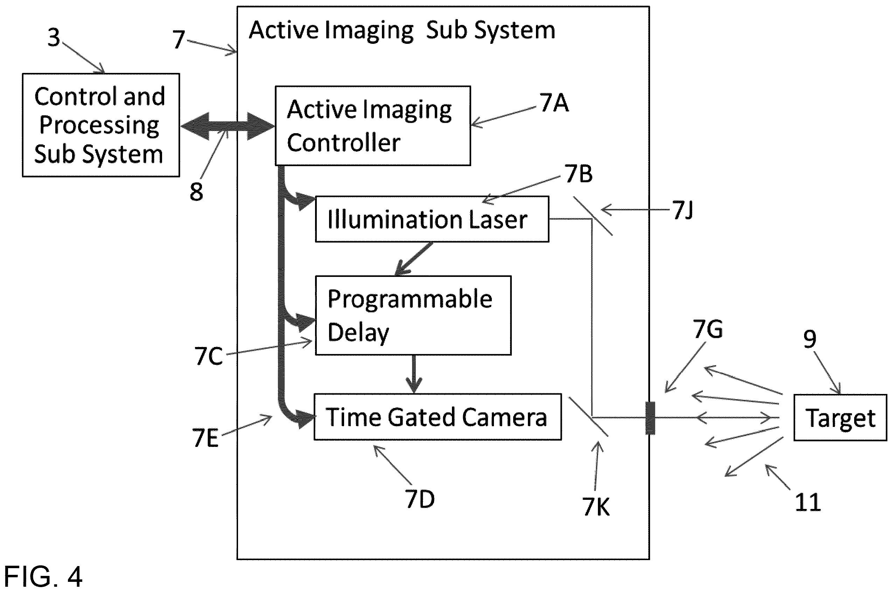

An alternate optical architecture, known as monostatic, is schematically illustrated in Fig 4. This variant active imaging system 7 comprises a single optical aperture 7G that is used both to transmit the laser light and receive the reflected light from the target. A mirror 7J that is highly reflecting at the laser wavelength is used to steer the laser beam 10 towards the aperture 7G. An optical component 7K, which may use known techniques for spatially multiplexing light such as polarisation or aperture sharing, combines the paths of the transmitted laser beam 10 and the reflected light 11.

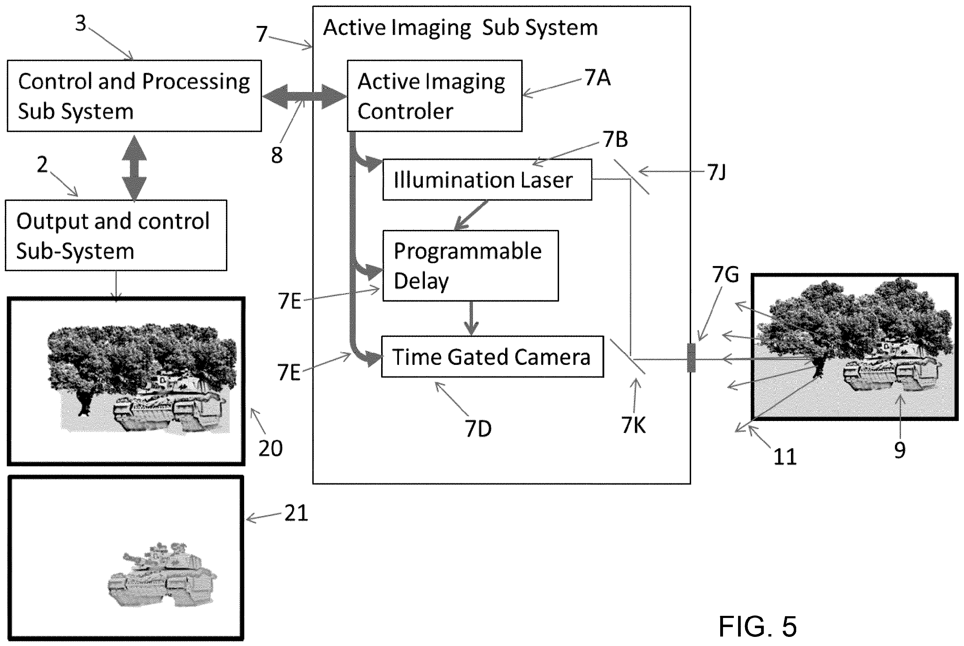

Figure 5 illustrates the process of clutter rejection using the system of Fig 4, though the system of Figs 2 and 3 could equally be used. The target 9 (in this example a tank) is illuminated by the laser 7B and the returns collected by a time gated camera 7D and processed and presented to the user via interface 2, either as first image 20 or second image 21. In taking the first image 20 the gate on time is large compared to the laser pulse duration, thus the image includes, in addition to a representation of the target 9, detail of some the foreground and some of the background. Conversely, if the gate open time is comparable to the physical depth of the target, the laser pulse duration is shorter than the gate on time, and the target is correctly placed in the gate open time, then the second image 21 results. The target 9, as represented in the second image 21, is cleanly segmented from the foreground and background. If the physical laser pulse duration is much smaller than the overall target dimensions and the camera 7D is 3D capable, then structure within the image 21 can be measured, for example the length of a gun barrel where the target 9 is a tank, which may be an aid to target identification.

The utility of the active imaging system 7 depends on the quality of the resulting image compared with the additional cost incurred by integrating active imaging into an observation system 1. It is known that both the laser 7B and the camera 7D contribute to the quality of the image produced. Further, choices such as selection of a laser type, for example the choice between a solid state laser (e.g. Nd:YAG, Er:Yag, or Ho:Yag) compared with a semiconductor laser also drive different electrical power requirements. Solid-state lasers also come at relatively fixed wavelengths and relatively narrow linewidths when compared with semiconductor lasers where the wavelength and linewidth may be varied.

An ideal laser source for active imaging has the following properties:

a. The ability to produce a beam with a large linewidth, say 5nm to 50nm or more to mimic the properties of natural light and reduce the effect of speckle on the image.

b. Safe to use in a long range observation applications where the object of interest lies 100m to 20km or more from the system location. This requirement is most easily met by using a wavelength within the range of 1.5$\mu$m to 1.8$\mu$m.

c. A time gated camera of suitable sensitivity at the laser wavelength is available for use.

d. Able to produce sufficient energy per pulse to reach the target of interest identified in point b, when used with the camera identified in point c, and with a linewidth identified in point a. Typically, such lasers require pulse energies within the range 10 to 100mJ per pulse, depending on the precise camera selected for use. The power of such a laser may be calculated using the repetition rate of the laser as $\mathrm{P} = E/\mathrm{T}_p = Ev_p$ where P is the power in Watts, E is the pulse energy in Joules, $\mathrm{T}_p$ is the pulse repetition period, and pulse frequency is $v_p = 1/T_p$ and measured in Hz. For a specific laser choice increasing the repletion rate from 20Hz to 2000Hz may increase the output power and the electrical power consumption by a factor of 100.

e. The laser should be sufficiently electrically efficient to minimise power consumption and thermal load within the observation system. The best wall plug efficiencies currently available are >40% from packaged semiconductor lasers (individual semiconductor devices may have an electrical power to optical power conversion of >50%). On the other hand standard solid state lasers operate at wall plug efficiencies in the <2 to 5% range. The wall plug efficiency is the power derived from an external power supply in order to operate the laser. This number will include the power used by all component parts of the laser, not just the immediate electrical to light conversion step. The wall plug efficiency therefore includes, but may not be limited, to any electronic control cards required to operate the laser subsystems, any thermal control required by parts of the laser, and losses in internal voltage conversion or power conditioning within the laser as well as the losses in converting electricity to light. Normally the wall plug efficiency varies over the operating temperature range of the system.

f. The physical laser pulse duration should be shorter (in distance) than the dimensions of the target so that the target can be cleanly segmented from the foreground and the background. For many applications this requires a pulse duration in the range 10 to 25 ns equating to a pulse length of 3m to 7.5m. If 3D image data of the target is required then shorter pulse durations, e.g. in the range 1nm to 3 ns are often needed to provide spatial resolutions in the 0.3m to 1m range.

h. The laser operates at relatively high repetition rates (≥ 1000Hz), for example to minimise image degradation caused by atmospheric turbulence in long range imaging. As noted in point d this represents a substantial increase in power consumption over standard laser sources which operate at 10's of Hz.

i) The laser is low cost.

Table 1 shows a variety of known commercially available laser types that meets condition c and compares their properties to the criteria just reviewed for active imaging sources.

Table 1

| Criteria | Laser Type (see list below table) | | | | | | |
|---|---|---|---|---|---|---|---|
|  | A | B | C | D | E | F | G |
| a | <1nm | <1.8nm | <2 | 25nm or more | 10's of nm | <10nm | <8nm |
| b | 1.064$\mu$m | 1.573$\mu$m | 1.62$\mu$m | 1.55$\mu$m | 4$\mu$m | 1.53$\mu$m | 1.561$\mu$m |
| c | Yes | Yes | Yes | Yes | Yes | Yes | Yes |
| d | 300mJ | 100mJ | 10mJ | 15mJ | 0.3mJ | 15mJ | 0.6mJ |
| e | 2% | 0.7% |  | 40 to 45% | 0.2% | 0.2% | 0.5% |
| f | 10-20ns | 10-20ns | 30-40ns | 5$\mu$s |  | 10-20ns | 1.5ns |
| h | 20Hz | 20Hz | 2kHz | 2kHz |  | 20Hz | 2-10kHz |
| i | Low | Low | Low | Low | Low | High | Medium |

A. Q-switched Nd:Yag Laser
B. Q-switched Nd:YAG with Optical Parametric Oscillator (OPO)
C. Fibre pumped Er:YAG
D. Multiple co-packaged Semi-conductor lasers
E. Thulium Fibre pumped bulk Ho:YAG and ZGB OPO
F. Q-switched Nd:YAG with line broadened OPO Optical parametric oscillator
G. Er:fibre based Master Oscillator Power Amplifier (MOPA )

It can be seen that there are currently no low cost lasers that can provide short pulses, high electrical efficiency and large linewidths simultaneously. There may be short pulse, high repetition rate examples of these and other lasers that appear to meet the requirements but in general these are laboratory demonstrators and may not be immediately available in affordable, efficient and reliable packages.

The invention was conceived to provide an improved active imaging system for use in the observation system described above.

US2020/124726 describes a known active imaging system. US2016363653 describes an imaging and automatic target recognition system.

According to a first aspect of the invention there is provided an active imaging system according to claim 1.

Recognising that the simultaneous meeting of requirements listed at points a to i is not feasible with a single laser of the art, the invention replicates an ideal laser by using two illuminator sources to obtain image data for two source images of the target and using imaging processing to synthesise image data for a further image that comprises the high image quality of the target provided by the first image without the foreground and background clutter.

By virtue of its broader linewidth, a higher quality image, i.e. with less speckle, can be produced using the returns from the first laser illuminator compared with that from the second laser illuminator. The shorter pulse duration of the second illuminator allows for better clutter rejection, and if short enough, 3D image detail of the target.

The first laser illuminator may operate with a higher repetition rate compared with the second laser illuminator in order that the first image of the target, and thus the resulting synthesised image, contains less noise cause by atmospheric turbulence.

Further advantageously, because neither laser alone needs to produce a broad linewidth, short pulse duration and high repetition rate, two relatively cheap lasers can be used, which notwithstanding that there are two of them, can still be cheaper to implement in an active imaging system than a single laser that exhibits all the desired properties. For example: the system may comprise a laser of type B (of table 1), a Q-switched Nd:YAG with Optical Parametric Oscillator (OPO) for the first laser, and a laser of type D, a Q-switched Nd:YAG with line broadened OPO Optical parametric oscillator, for the second laser.

The specific line width and repetition rates of the first and second laser illuminators is selected depending on the specific application, however, for example, the first laser illuminator may operate with a line width of at least 10nm and favourably at least 25nm. The first laser illuminator may operate with a repetition rate of at least 1 KHz but favourably at least 2KHz in order to reduce atmospheric noise in the resulting image.

As atmosphere noise in the second image is not a concern. The second laser illuminator may operate at a repetition rate below 1KHz and optionally less than 100Hz. This allows the selection of a relatively inexpensive laser for the second laser.

The second laser may operate with a pulse duration equal or less than 20ns in order to resolve targets in the order of a few meters or less in size.

The second laser may operate with a linewidth of equal or less than 2nm.

The laser pulse energies may be estimated using standard techniques based on the laser range equation. Typically this is controlled by the camera sensitivity, the target range, the target reflectivity and depolarisation, background light e.g. solar illumination within the narrow band filter range and leakage from outside this range, the laser divergence, the receive aperture size, atmospheric transmission and losses within any filter and other optical components. As a result, pulse energies can vary significantly. Practical experience suggests pulse energies ranging from 1mJ for short-range applications to 100mJ for long-range applications provides useful performance.

The active imaging system may be adapted to operate the first and second laser illuminators at different times.

The camera system may comprise a single camera to capture the returns from the first and second laser illuminators to obtain the first and second images. Alternatively the system may comprise a first camera adapted to capture the returns from the first laser illuminator and a second camera arranged to capture the returns from the second illuminator.

The pulses of light from the first and second laser illuminators may have substantially the same centre wavelength. Alternatively the pulses of light from the first and second laser illuminators may be of different centre wavelengths with line widths that do not overlap.

Where the first and second laser illuminators operate at different centre wavelengths, the system may comprise an optical element, e.g. a dichroic splitter, to spatially separate the returns from the two lasers, so that they can be directed to different cameras.

If one camera is used it is favourable that the first and second laser illuminators operate at the same wavelength and the returns are captured in a time multiplexed manner. This allows the camera to be fitted with a very narrowband filter which increases the sensitivity of the camera to the laser light and reduces background light e.g. from other light emitting sources.

Alternatively, where the first and second laser designators operate at different wavelengths, either with a single camera adapted to capture both wavelengths, or two cameras each arranged to capture the return from one of the laser illuminators, the pulses and returns may simultaneously detected.

This system may comprise a third laser illuminator adapted to illuminate the scene with light pulses of duration less than that of the second laser illuminator, e.g. of around 2ns to provide spatial resolution on length scales of order 1m or less.

The returns from the third laser illuminator may be received by one of the first or second cameras or by a third camera.

The invention will now be described by way of example with reference to the following figures in which:

**Figure 1** is a schematic of an observation system of the prior art;

**Figure 2** is a schematic of the active imaging system of the prior art observation system of Fig 1;

**Figure 3** is a schematic of the active imaging system of Fig 2 showing additional detail;

**Figure 4** is a schematic of a variant active imaging system of the prior art

**Figure 5** is a schematic of the variant active imaging system of the prior art illustrating the process of clutter rejection;

**Figure 6** is a schematic of an active imaging system including two laser illuminators and a single time gated camera in a bistatic arrangement;

**Figure 7** illustrates an algorithm to apply a filter function to isolate the target within the first image using the second image as a template; and

**Figure 8** is a schematic of an active imaging system comprising two illuminators and two time gated cameras in a bistatic arrangement.

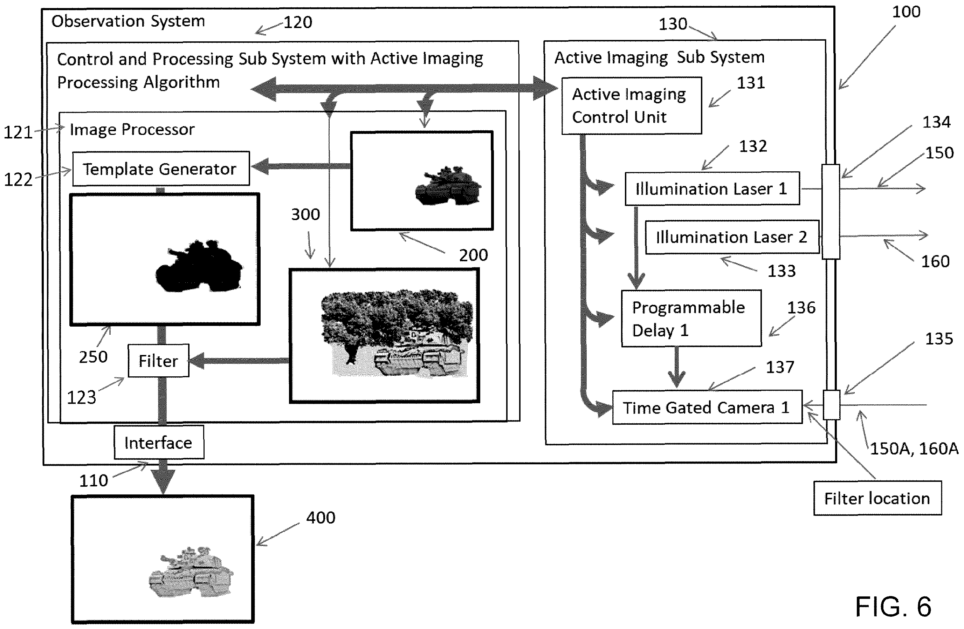

Figure 6 illustrates an observation system 100 comprising an interface 110, a control and processing sub-system 120 and an active imaging sub-system 130. The control and processing sub system 120 comprising processing functions adapted to run an improved active imaging algorithm.

The observation system 100 typically also includes the target detection sensor sub-system and coarse tracking sub-system of Fig 1 which each function as previously described.

The active imaging subsystem 130 comprises a controller 131, a first pulsed illumination laser 132, a second pulsed illumination laser 133, a first aperture 134, a second aperture 135, a programmable delay 136, and a time gated camera 137.

The first laser 132 is adapted to emit laser pulses of a relatively long duration compared with the laser pulses emitted by the second laser 133.

The first laser 132 is adapted to operate at a repetition rate of at least 2 KHz. The second laser 133 is adapted to operate at a repetition rate below 2KHz, favourably below 1 KHz, e.g. a few hundred MHz or less.

In operation pulses of light 150, 160 from the respective first and second lasers 132, 133 are directed to the target (not shown) through the first aperture 134. The second, separate, aperture 135 collects reflected laser light 150A 160A from the scene and direct it onto a focal plane array (not shown) of the gated camera 137 that is adapted to detect the wavelength(s) of returns 150A 160A of both lasers 132, 133.

Narrow band filters (not shown) appropriate to the wavelength and linewidth of the first and second lasers are positioned in front of the time gated camera 137.

The first and second lasers 132 133 may emit pulses of light with the same centre wavelength or different centre wavelengths. Where the first and second lasers 132, 133 emit pulses of the same or similar wavelengths, pulses of the two lasers are interleaved (time-multiplexed) so as not to be received at the second aperture 135 simultaneously. Where the pulses have different centre wavelengths it is still usually preferably to interleave (time-multiplexed) the pulses unless the camera is capable of spectral separation and applying different gate times for receiving the spectrally distinct pulses.

The programmable delay generator 136, operating under the control of the controller 131, is triggered by an emission from either laser illuminator 132, 133 to time the opening of the gate of the time gated camera 137 to detect the reflected light returns from the respective laser 132, 133. The delay is determined using the range L to the target known to the observation system 100.

The gate open time is derived using the laser illuminator pulse duration to minimise the gate open time's overall duration whilst ensuring it is longer than the pulse duration. As such the gate open time is longer when receiving returns from the first laser illuminator 132 than for receiving returns from the laser illuminator 133.

The controller 301 may operate the lasers 132, 132 such that for each laser pulse generated by the second laser illuminator 133, there may be one or more pulses generated by the first laser illuminator 132.

A detected image from each return is passed from the time gated camera 137 via the controller, 131, to the control and processing sub system 120.

By virtue of the relatively short pulse duration of the second laser 133 the images of the target derived from the returns from the second laser 2 (hereafter referred to as second image or second images) contain relatively little if any information of background and foreground features in the scene.

In contrast, images of the target derived from the returns from the first laser 132 (hereinafter the first image or first images) contain, by virtue of the longer pulse duration of the first laser, more information of background and foreground features of the scene. However, by virtue of the first laser's relatively wide spectral line width and high repetition rate, the first images contain less spatial noise and thus may be higher quality than those from the second laser.

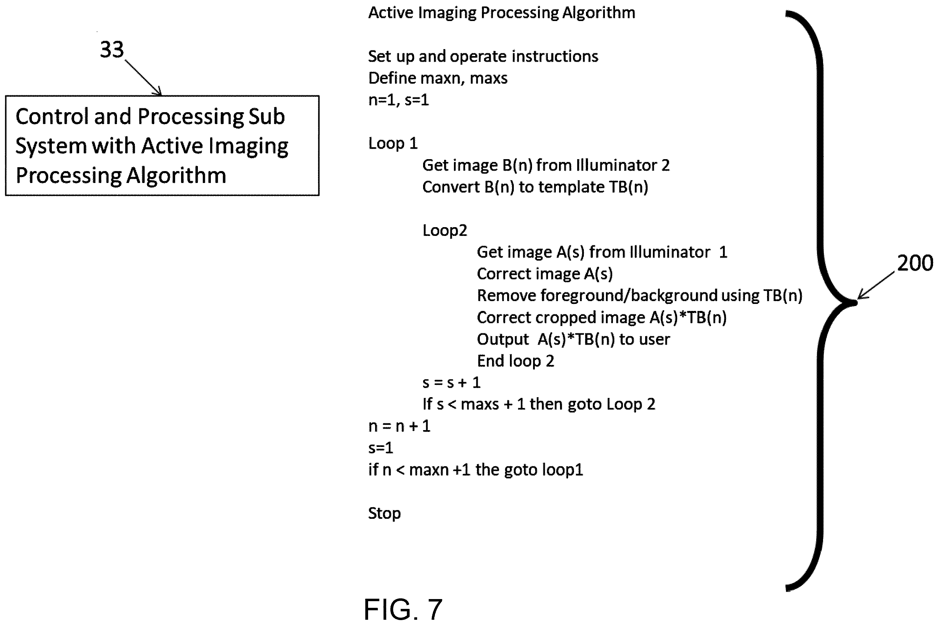

The control and processing sub-system 120 comprises an image processor 121 adapted to run an algorithm 200 (see Fig 7) that uses a second image as a template to excise or filter from one or more first images non-target features of the scene that do not appear in the second image.

Opto-mechanical design principles well known to those skilled in the art will normally allow the system to be built and aligned using standard techniques so that the first illuminator is boresighted to the second illuminator to an acceptable level, typically this may be a 1/5th to a 1/20th of the laser divergence. Favourably each illuminator 132, 133 should have the same divergence and direction within usual opto-mechanical tolerances, say 1/5th of the laser divergence. Again, there are standard techniques for achieving this that are known and achievable to the required accuracy. Further, the camera itself will confirm if this alignment is archived in practice because the illuminator spot on the target will be clearly visible.

The firing time of the each illuminator laser is synchronised with the gate time of the camera to ensure that the reflected light arrives at the camera 137 while it is open as previously described. The gate time may be different for each illuminator (normally longer for the first illuminator 132 than for the second illuminator 133). The appropriate firing time of each laser 132 133 prior to the gate opening is calculated from the known range to the target derived from the laser rangefinder.

Figure 7 illustrates an example algorithm. A specific case is considered where there is maxs first illuminator pulses, where maxs is greater than or equal to one for each one of maxn, where maxn is greater than or equal to one, second illuminator pulses to produce a sequence of maxn times maxs pulses. Normally maxs is greater than maxn.

At the start of loop 1, the system acquires an image using the second laser illuminator 132, B(n=1). An image processing function is called to convert this image into a template TB(n=1) using a number of possible image processing techniques.

Having acquired the template, TB(n=1), a series of maxs images using the first laser illuminator 132 are acquired, processed using TB(n=1) to remove the background and foreground and then outputted as an image.

Having completed the series of maxs images using laser illuminator 1, the second laser illuminator 2 image is acquired and converted into TB(n=2) which is used to process the next maxs images and so on.

To carry out the algorithm, the image processor 121 comprises the functions of a template generator 122 and a filter 123.

The template generator 122 is adapted to receive a second image 200 from the active imaging sub-system 130 of a scene including a target and process it to create a template 250. An example method of this process comprises assigning each pixel of the second image a value of 1 or 0. Each pixel that holds a meaningful value is assigned a value 1, and each pixel that holds substantially no value other than expected background noise is assigned a value 0. The resulting template 250 can thus be thought of as a silhouette of the target.

The template 250 is outputted to the filter 123. The filter 123 processes a corresponding first image(s) 300 of the same scene generated by the first laser illuminator 312 by pixel multiplication with the template 250 This process nulls the value of all pixels of the first image 300 that map to pixels of the template 250 having a value 0 thereby removing all background and foreground clutter from the first image 300 to leave only the target in the outputted image 400. This process does not affect the values of the pixels that fall within the silhouette of the template 250 as such the resulting image 400 retains the high quality of the first image 300.

The specific template creation process outlined here is solely for explanation purposes and several other ways of manipulation the pair of images, may be used, including, for example, an edge detection process.

Following processing, the final image 400 with the background and foreground removed is outputted, e.g. to a human user or autonomous system, via the interface 110

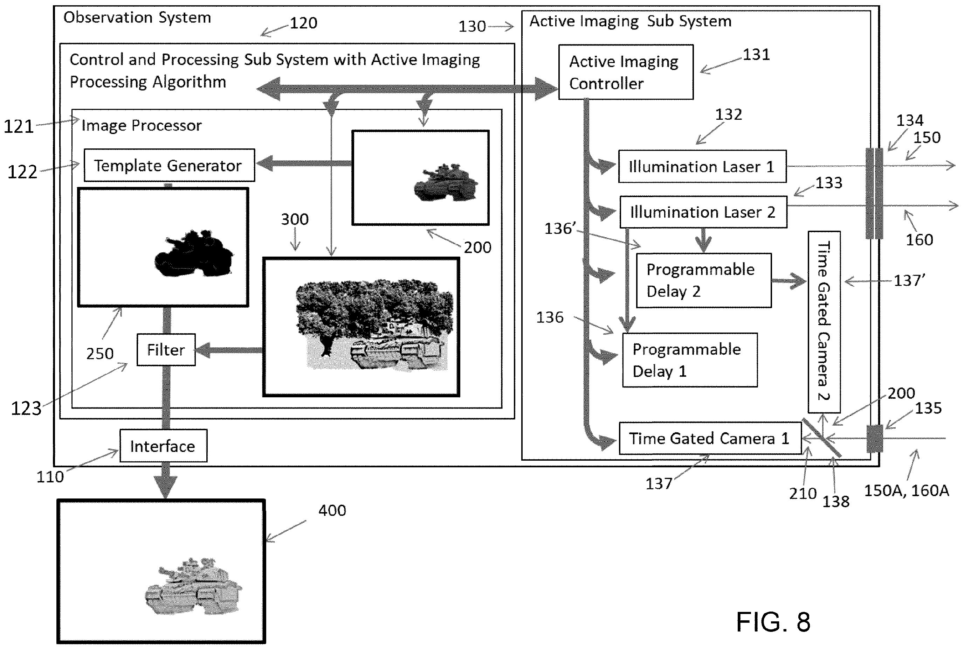

Figure 8 illustrates a variant architecture of active imaging sub-system. This variant differs from the embodiment of Fig 6 in that it comprises a first programmable delay 136 and a second programmable delay 136', and a first time gated camera 137 and a second time gated camera 137'.

The wavelengths of the first laser illuminator 132 and second laser illuminator 133 are different and their line widths do not overlap.

A small portion of the emission from the first laser 132 is received by the first programmable delay 136 and a small portion of the emission from the second laser 133 is received by the second programmable delay 136' to set the gate open time for the second camera 137'.

Reflected returns 150A, 160A from the two lasers 1312 133 received at the second aperture 135 are directed to a mirror 138 with a high reflectivity for the wavelength of the second laser illuminator 133 and a high transmission for the wavelength of the first laser illuminator 132. This splits the returns such that returns 150A from the first laser illuminator 132 is received at the first camera 137 and returns 160A from the second laser illuminator 160A are received by the second camera 137'.

With this arrangement it is possible for the first and second laser illuminators 132 133 to fire simultaneously such that the returns 150A 160A are received simultaneously.

One or more filters (not shown) may be included to restrict light received at the mirror 138 to the wavelengths of the first and second laser illuminators 132 133.

To provide good filtering the registration between the pixels of each camera 132 133 should be known. For example if the pixel size in the first time gated camera is smaller than for the second time gated camera, the number and size of pixels can be equalised by creating a modified image using interpolation or other standard image processing technique.

The images derived from the first time gated camera and second time gated camera are processed in the manner afore described to generate a template from the returns of the second laser illuminator 2 used to process the images derived from the first gated camera.

Ensuring that the FoV of the first gated camera 132 overlaps with the FoV of the second time gated camera 133 to an acceptable degree can be achieved using design principles well known to those skilled in the art. If the pixel size between the cameras is different then optical or processing techniques may be used to interpolate the data so the equivalent pixels on each time gated camera may be defined. Finally, it is necessary to ensure that the system knows which pixel in the first gated camera corresponds to which pixel in the second time gated camera. This is unlikely to be achieved consistently through passive alignment and so may require an active co-boresighting process to be used. Examples are known, for example the two time gated cameras could passively view the scene and correlate suitable features to derive an accurate map of pixel to pixel relationships.

**Claims**

1. An active imaging system (100) comprising a first laser illuminator (132), adapted to illuminate a scene, including a target with pulses of light; and a camera system (137) arranged to receive light from the first laser illuminator (132) that has been reflected by the scene;

   wherein the camera system (137,131) is adapted to use a first gate period for receiving returns from the first laser illuminator (132) to obtain a first image (300) of the scene including the target;
   the active imaging system **characterised in** comprising
   a second laser illuminator (133), adapted to illuminate the scene, including the target, with pulses of light;
   the camera system (137) arranged to receive light from the second laser illuminator (133) that has been reflected by the scene;
   the pulses of light emitted from the first laser illuminator having a broader spectral linewidth and a longer pulse duration compared with pulses of light from the second laser illuminator;
   and wherein the camera system (137,131) is adapted to:
   use a second gate period shorter than the first gate period to receive returns from the second laser illuminator to obtain a second image (200) of the target that selectively excludes non-target foreground and background elements within the scene;
   and an image processing means (121) adapted to use the second image as a template (250) to selectively remove the non-target foreground and background elements from the first image (300).

2. An active imaging system according to claim 1 wherein the first laser illuminator (132) is arranged to operate at a pulse repetition rate that is higher than the second laser illuminator (133).

3. An active imaging system according to claim 2 wherein the first laser illuminator (132) is arranged to operate at a pulse repetition rate of at least 2 KHz.

4. An active imaging system according to claim 1 or 2 adapted to operate the first and second laser illuminators (132, 133) to illuminate the scene at different times.

5. An active imaging system according to claim 4 wherein the first and second laser illuminators (132, 133) operate at substantially the same centre wavelength

6. An active imaging system according to any claim 1-4 wherein the first and second laser illuminators (132, 133) operate at different centre wavelengths

7. An active imaging system according to any previous claim wherein the camera system (137) comprises a single detector (137) that captures the returns from both the first and second laser illuminators (132, 133) to obtain the first and second images (300, 200).

8. An active imaging system according to claim 6 or 7 adapted to operate the first and second laser illuminators (132, 133) to illuminate the scene simultaneously.

9. An active imaging system according to claim 6 or 8 wherein the camera system comprises a first camera (137) adapted to capture the returns from the first laser illuminator (132) and a second camera (137') arranged to capture the returns from the second illuminator (133).


**Patentansprüche**

1. Aktives Bildgebungssystem (100), umfassend eine erste Laserbeleuchtungseinrichtung (132), die dafür ausgelegt ist, eine Szene, die ein Ziel enthält, mit Lichtimpulsen zu beleuchten; und ein Kamerasystem (137), das dafür ausgelegt ist, Licht von der ersten Laserbeleuchtungseinrichtung (132) zu empfangen, das von der Szene reflektiert wurde;

   wobei das Kamerasystem (137, 131) dafür ausgelegt ist, eine erste Verschlusszeit zum Empfangen von Rücksignalen von der ersten Laserbeleuchtungseinrichtung (132) zu verwenden, um ein erstes Bild (300) der Szene, die das Ziel enthält, zu erhalten;

wobei das aktive Bildgebungssystem **dadurch gekennzeichnet ist, dass** es umfasst:

eine zweite Laserbeleuchtungseinrichtung (133), die dafür ausgelegt ist, die Szene, die das Ziel enthält, mit Lichtimpulsen zu beleuchten;

wobei das Kamerasystem (137) dafür ausgelegt ist, Licht von der zweiten Laserbeleuchtungseinrichtung (133) zu empfangen, das von der Szene reflektiert wurde;

wobei die von der ersten Laserbeleuchtungseinrichtung emittierten Lichtimpulse eine breitere spektrale Linienbreite und eine längere Impulsdauer im Vergleich zu Lichtimpulsen von der zweiten Laserbeleuchtungseinrichtung aufweisen;

und wobei das Kamerasystem (137, 131) ausgelegt ist zum:

Verwenden einer zweiten Verschlusszeit, die kürzer als die erste Verschlusszeit ist, um Rücksignale von der zweiten Laserbeleuchtungseinrichtung zu empfangen, um ein zweites Bild (200) des Ziels zu erhalten, das nicht zum Ziel gehörende Vordergrund- und Hintergrundelemente innerhalb der Szene selektiv ausschließt;

und ein Bildverarbeitungsmittel (121), das dafür ausgelegt ist, das zweite Bild als Vorlage (250) zu verwenden, um die nicht zum Ziel gehörenden Vordergrund- und Hintergrundelemente aus dem ersten Bild (300) selektiv zu entfernen.

**2.** Aktives Bildgebungssystem nach Anspruch 1, wobei die erste Laserbeleuchtungseinrichtung (132) dafür ausgelegt ist, mit einer Impulswiederholungsrate zu arbeiten, die höher als die der zweiten Laserbeleuchtungseinrichtung (133) ist.

**3.** Aktives Bildgebungssystem nach Anspruch 2, wobei die erste Laserbeleuchtungseinrichtung (132) dafür ausgelegt ist, mit einer Impulswiederholungsrate von mindestens 2 KHz zu arbeiten.

**4.** Aktives Bildgebungssystem nach einem der Ansprüche 1 oder 2, das dafür ausgelegt ist, die erste und die zweite Laserbeleuchtungseinrichtung (132, 133) zu betreiben, um die Szene zu unterschiedlichen Zeiten zu beleuchten.

**5.** Aktives Bildgebungssystem nach Anspruch 4, wobei die erste und die zweite Laserbeleuchtungseinrichtung (132, 133) im Wesentlichen mit der gleichen Mittenwellenlänge arbeiten.

**6.** Aktives Bildgebungssystem nach einem der Ansprüche 1 bis 4, wobei die erste und die zweite Laserbeleuchtungseinrichtung (132, 133) mit unterschiedlichen Mittenwellenlängen arbeiten.

**7.** Aktives Bildgebungssystem nach einem der vorhergehenden Ansprüche, wobei das Kamerasystem (137) einen einzelnen Detektor (137) umfasst, der die Rücksignale von sowohl der ersten als auch der zweiten Laserbeleuchtungseinrichtung (132, 133) erfasst, um das erste und das zweite Bild (300, 200) zu erhalten.

**8.** Aktives Bildgebungssystem nach einem der Ansprüche 6 oder 7, das dafür ausgelegt ist, die erste und die zweite Laserbeleuchtungseinrichtung (132, 133) zu betreiben, um die Szene gleichzeitig zu beleuchten.

**9.** Aktives Bildgebungssystem nach einem der Ansprüche 6 oder 8, wobei das Kamerasystem eine erste Kamera (137), die dafür ausgelegt ist, die Rücksignale von der ersten Laserbeleuchtungseinrichtung (132) zu erfassen, und eine zweite Kamera (137'), die dafür ausgelegt ist, die Rücksignale von der zweiten Beleuchtungseinrichtung (133) zu erfassen, umfasst.

**Revendications**

**1.** Système d'imagerie active (100) comprenant un premier dispositif d'éclairage laser (132), adapté pour éclairer une scène comprenant une cible avec des impulsions de lumière ; et un système de caméra (137) agencé pour recevoir de la lumière provenant du premier dispositif d'éclairage laser (132) qui a été réfléchie par la scène ;

dans lequel le système de caméra (137, 131) est adapté pour utiliser une première période de déclenchement pour recevoir des retours à partir du premier dispositif d'éclairage laser (132) pour obtenir une première image (300) de la scène comprenant la cible ;

le système d'imagerie active étant **caractérisé en ce qu'**il comprend

un deuxième dispositif d'éclairage laser (133), adapté pour éclairer la scène, y compris la cible, avec des impulsions de lumière ;

le système de caméra (137) étant agencé pour recevoir de la lumière provenant du deuxième dispositif d'éclairage laser (133) qui a été réfléchie par la scène ;

les impulsions de lumière émises par le premier dispositif d'éclairage laser présentant une largeur de ligne spectrale plus large et une durée d'impulsion plus longue par comparaison à des impulsions de lumière provenant du deuxième dispositif d'éclairage laser ;

et dans lequel le système de caméra (137, 131) est adapté pour :

utiliser une seconde période de déclenchement plus courte que la première période de déclenchement pour recevoir des retours à partir du deuxième dispositif d'éclairage laser afin d'obtenir une seconde image (200) de la cible qui exclut sélectivement les éléments d'avant-plan et d'arrière-plan non cibles dans la scène ;

et des moyens de traitement d'image (121) adaptés pour utiliser la seconde image comme modèle (250) pour retirer sélectivement les éléments d'avant-plan et d'arrière-plan non cibles à partir de la première image (300).

2. Système d'imagerie active selon la revendication 1, dans lequel le premier dispositif d'éclairage laser (132) est agencé pour fonctionner à une fréquence de répétition d'impulsion qui est supérieure à celle du deuxième dispositif d'éclairage laser (133).

3. Système d'imagerie active selon la revendication 2, dans lequel le premier dispositif d'éclairage laser (132) est agencé pour fonctionner à une fréquence de répétition d'impulsion d'au moins 2 KHz.

4. Système d'imagerie active selon la revendication 1 ou 2, adapté pour faire fonctionner les premier et deuxième dispositifs d'éclairage laser (132, 133) pour éclairer la scène à des instants différents.

5. Système d'imagerie active selon la revendication 4, dans lequel les premier et deuxième dispositifs d'éclairage laser (132, 133) fonctionnent sensiblement à la même longueur d'onde centrale.

6. Système d'imagerie active selon l'une quelconque des revendications 1 à 4, dans lequel les premier et deuxième dispositifs d'éclairage laser (132, 133) fonctionnent à des longueurs d'onde centrales différentes.

7. Système d'imagerie active selon l'une quelconque des revendications précédentes, dans lequel le système de caméra (137) comprend un seul détecteur (137) qui capture les retours provenant à la fois des premier et deuxième dispositifs d'éclairage laser (132, 133) pour obtenir les première et seconde images (300, 200).

8. Système d'imagerie active selon la revendication 6 ou 7, adapté pour faire fonctionner les premier et deuxième dispositifs d'éclairage laser (132, 133) pour éclairer la scène simultanément.

9. Système d'imagerie active selon la revendication 6 ou 8, dans lequel le système de caméra comprend une première caméra (137) adaptée pour capturer les retours provenant du premier dispositif d'éclairage laser (132) et une deuxième caméra (137') agencée pour capturer les retours provenant du deuxième dispositif d'éclairage (133).

**Target Detection Sensor External**
1. Radar system
2. Infrared or Thermal sensor
3. Short wave IR sensor
4. Visible sensor
5. UV sensor
6. Acoustic Sensor
7. Off board sensor

← 5B

**A Representative Observation System**

**Acquisition and Track System** ← — 4

**Target Detection Sensor Sub-System** ← — 5

1. Radar system
2. Infrared or Thermal sensor
3. Short wave IR sensor
4. Visible sensor
5. UV sensor

← 5A

**Interface**
1. User display
2. Autonomous capability

1

2 →

**Control and processing Sub-System**
1. Presentation of system status to output and control.
2. Controlling the system, managing data flows between the various sensors, and analysing the data.

3 →

**Coarse Tracking Sub-System** ← — 6
1. Wide area sensor
   a. Thermal sensor
   b. Visible sensor
2. Narrow field of view sensor
   a. Thermal sensor
   b. Visible sensor
   c. Short Wave IR Sensor
3. Rangefinder

**Active Imaging Sub-System** ← — 7
1. Laser source
2. Time gated Camera(s)
3. Delay Generator

8

FIG. 1

EP 4 088 138 B1

FIG. 2

EP 4 088 138 B1

FIG. 3

FIG. 4

FIG. 5

Control and Processing Sub System — 3

Output and control Sub-System — 2

Active Imaging Sub System — 7

Active Imaging Controler — 7A

Illumination Laser — 7B

Programmable Delay

Time Gated Camera — 7D

7E

8

7J

7G

7K

11

9

20

21

EP 4 088 138 B1

FIG. 6

**Control and Processing Sub System with Active Imaging Processing Algorithm**

33

Active Imaging Processing Algorithm

Set up and operate instructions
Define maxn, maxs
n=1, s=1

Loop 1
    Get image B(n) from Illuminator 2
    Convert B(n) to template TB(n)

    Loop2
        Get image A(s) from Illuminator 1
        Correct image A(s)
        Remove foreground/background using TB(n)
        Correct cropped image A(s)*TB(n)
        Output  A(s)*TB(n) to user
        End loop 2
    s = s + 1
    If s < maxs + 1 then goto Loop 2
n = n + 1
s=1
if n < maxn +1 the goto loop1

Stop

200

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020124726 A
- US 2016363653 A